# NEUE EUROPÄISCHE PATENTSCHRIFT

(11) **EP 1 719 645 B2**
(45) Veröffentlichungstag und Bekanntmachung des Hinweises auf die Entscheidung über den Einspruch: **15.07.2015**
(45) Hinweis auf die Patenterteilung: 23.01.2008
(21) Anmeldenummer: 05290970.2
(22) Anmeldetag: 03.05.2005
(51) Int. Cl.: B60H 1/00

(54) **Stellvorrichtung für wenigstens drei Klappen einer Belüftungs-, Heizungs-oder Klimaanlage eines Kraftfahrzeugs**
Actuating device for at least three damper doors of a vehicle heating, ventilating, and air-conditioning system
Dispositif de commande d'au moins trois volets d'un système de ventilation, chauffage ou climatisation de véhicule

(43) Veröffentlichungstag der Anmeldung: 08.11.2006
(73) Patentinhaber: Mahle Behr France Rouffach S.A.S, 68250 Rouffach (FR)
(72) Erfinder: Jesslen, Jean-Luc, 68500 Berwiler (FR); Ludmann, Eric, 68320 Holtzwihr (FR)
(74) Vertreter: Grauel, Andreas

(56) Entgegenhaltungen:
- EP-A- 1 132 228
- EP-A1- 1 640 194
- EP-A2- 1 319 541
- WO-A1-02/098689
- DE-A1- 3 910 489
- DE-A1- 10 127 347
- DE-A1- 19 928 834
- FR-A1- 2 701 432
- US-A- 5 052 282
- US-A- 5 338 249

## Beschreibung

Die Erfindung betrifft eine Stellvorrichtung für wenigstens drei Klappen einer Belüftungs-, Heizungs- oder Klimaanlage eines Kraftfahrzeugs gemäß dem Oberbegriff des Anspruchs 1.

Aus der DE 101 27 347 ist eine gattungsgemäße Stellvorrichtung bekannt. Hierbei werden wenigstens drei Klappen einer Belüftungs-, Heizungs-, oder Klimaanlage eines Fahrzeugs mit einer Kurvenscheibe, die Führungen für Hebel aufweist, gesteuert.

Aus der DE 199 28 834 A1 ist eine gattungsgemäße Stellvorrichtung bekannt. Hierbei werden wenigstens drei Klappen mit einer Kurvenscheibe gesteuert, die wenigstens zwei jeweils eine Steuerkurve bildende Führungen aufweist, zur Führung von Betätigungshebeln für die Klappen, wobei die Betätigungshebel über Führungszapfen in der jeweiligen Führung geführt sind. Für eine unabhängige Ansteuerbarkeit mehrerer Klappen, wobei die Steuerkurven auf einer Seite der Kurvenscheibe angeordnet sind und sich kreuzen, wird einer der Hebel über einen zweiten, nur dort in einer Hilfsführung zum Einsatz kommenden Führungszapfen geführt.

Aus der DE 39 10 489 A1 ist ein Verfahren zur Frischluftsteuerung sowie eine hierfür geeignete Einrichtung bekannt. Hierbei ist eine von einem Luftverteileinstellelement (Drehknopf) drehbare Kulissenscheibe vorgesehen, mit zumindest zwei in sich geschlossenen Kulissenbahnen mit darin geführten Kulissenhebeln und daran über drei Langlochführungen gekoppelten insgesamt drei Anlenkhebeln, von denen der erste Anlenkhebel mit einer ersten Luftklappe und einer Zusatz-Luftklappe, der zweite Anlenkhebel und der dritte Anlenkhebel mit einer dritten Luftklappe in Dreheinstellabhängigkeit stehen.

Derartige Stellvorrichtungen lassen jedoch noch Wünsche offen, insbesondere wenn mehr als drei Klappen mit einem Stellorgan zu steuern sind.

Es ist Aufgabe der Erfindung, eine verbesserte Stellvorrichtung zur Verfügung zu stellen, wobei die Stellvorrichtung möglichst kompakt bauen soll.

Diese Aufgabe wird gelöst durch eine Stellvorrichtung mit den Merkmalen des Anspruchs 1. Vorteilhafte Ausgestaltungen sind Gegenstand der Unteransprüche.

Erfindungsgemäß ist eine Stellvorrichtung für wenigstens drei Klappen einer Belüftungs-, Heizungs- oder Klimaanlage eines Kraftfahrzeugs mit mindestens einer Kurvenscheibe, die Klappenseitig ausgebildete Führungen als Kurvenbahnen für Hebel aufweist, wobei eine weitere Führung als Kurvenbahn für einen Hebel an einer der Klappen ausgebildet ist. Durch das Vorsehen einer Führung, die getrennt von der Kurvenscheibe ausgebildet ist, kann eine Koppelung der Bewegungen einzelner Klappen ermöglicht werden, beispielsweise der Front- und der Fondbelüftungsklappe, wobei das Öffnen und das Schließen der Klappen nicht parallel zueinander erfolgen muss, sondern gemäß einer durch die Führung und beispielsweise einen in die Führung eingreifenden Zapfen, der an einem Hebel ausgebildet ist, gebildeten Zwangsführung erfolgen kann. Auf diese Weise lässt sich beispielsweise ermöglichen, dass mit Hilfe eines Stellorgans vier Klappen betätigt werden können, wobei die einzelnen Klappen in vorgegebenen Relationen zueinander schwenken.

Die Führung ist an einer der Flächen der Klappe, insbesondere der Frontbelüftungsklappe, angebracht oder vorstehend ausgebildet, wobei die Führung in einer Ebene angeordnet ist, die senkrecht zur Schwenkachse der Klappe verläuft. Eine derartige Klappe ist relativ einfach und kostengünstig herstellbar. Zudem wird die Kurvenscheibe durch die Verringerung der hierin vorzusehenden Führungen vereinfacht, so dass beispielsweise nur auf einer Seite der Kurvenscheibe Führungen vorgesehen sein müssen. Dies ermöglicht unter anderem eine Verkleinerung des Bauraums.

Bevorzugt ist ein Hebelarm mit Zapfen in eine der Klappen, insbesondere an der Fondbelüftungsklappe, integriert ausgebildet oder hieran angebracht. Eine derartige Ausgestaltung ist relativ einfach und kostengünstig herstellbar. Im Falle einer zweizonigen Klimaanlage kann die Fondbelüftungsklappe beispielsweise auch durchgehend für beide Klimazonen ausgebildet sein, so dass bevorzugt eine Koppelung derselben mit derjenigen der Fahrerseite zugeordneten Frontbelüftungsklappe erfolgt.

Der Hebelarm mit Zapfen ist bevorzugt an einer benachbart zur Klappe mit Führung angeordneten Klappe angebracht oder ausgebildet, so dass nur kurze Wege überbrückt werden müssen.

Bevorzugt ist der Hebelarm in einer Ebene angeordnet, die senkrecht zur Schwenkachse der Klappe verläuft, womit die beiden Ebenen, in welchen der Hebelarm und die Führung angeordnet sind, parallel verlaufen.

Die Führung ist bevorzugt abgerundet V- oder L-förmig ausgebildet, so dass ein verzögertes Öffnen der angekoppelten Klappe erfolgt, jedoch sind auch andere Kurvenverläufe möglich.

Der Bereich der Klappe, in welchem die Führung ausgebildet ist, ist bevorzugt einstückig mit der Klappe ausgebildet, insbesondere mittels Spritzgießens.

Als gemeinsames Stellorgan für die miteinander gekoppelten Klappen ist bevorzugt ein Schrittmotor vorgesehen, welcher die Kurvenscheibe dreht.

Im Folgenden wird die Erfindung anhand eines Ausführungsbeispiels unter Bezugnahme auf die Zeichnung im Einzelnen erläutert. In der Zeichnung zeigen:

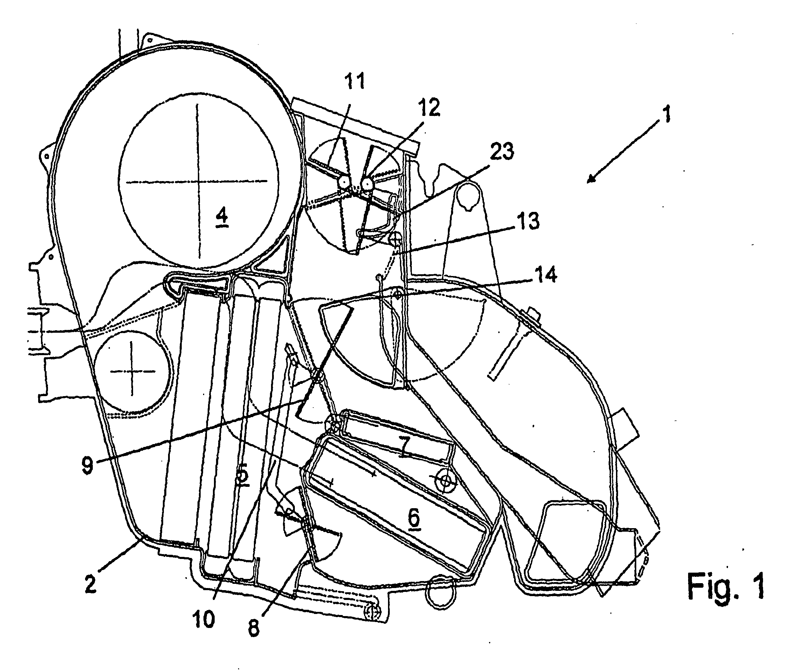

- Fig. 1: einen schematischen Schnitt durch eine Kraftfahrzeug-Klimaanlage mit einer Mehrzahl von Klappen,
- Fig. 2: eine perspektivische Ansicht der Klappen einer zweizonigen Klimaanlage, die mit Hilfe zweier Stellorgane gesteuert werden,
- Fig. 3: eine perspektivische Detailansicht des linken Bereichs von Fig. 2 ohne Entforstungsklappe,

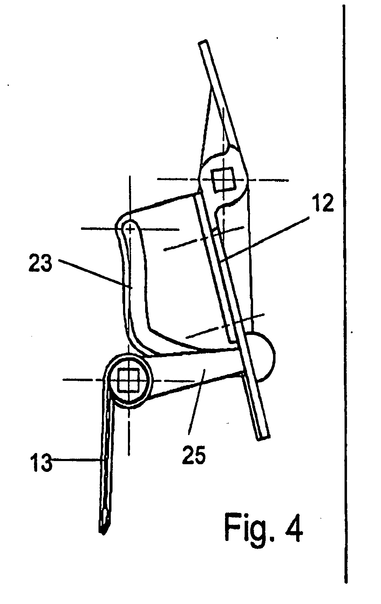

- Fig. 4: eine Seitenansicht von Fig. 3,
- Fig. 5: eine perspektivische Ansicht der Frontbelüftungsklappe mit integrierter Kurvenscheibe,
- Fig. 6: eine perspektivische Ansicht der Fondbeluftungsklappe mit integriertem Hebel,

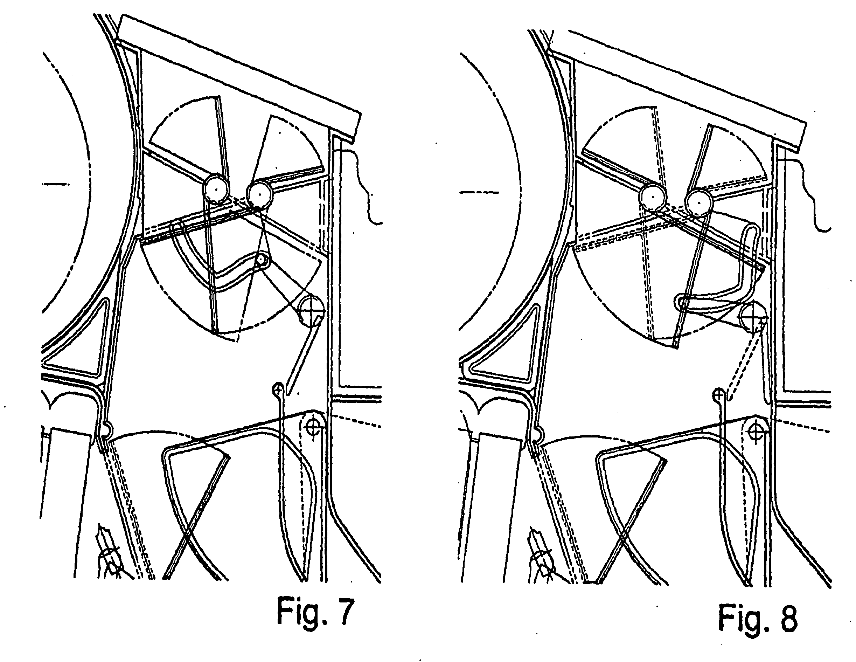

- Fig. 7: eine Seitenansicht der Klappen in der Klimaanlage im Betriebszustand "Entfrosten",
- Fig. 8: eine Seitenansicht der Klappen in der Klimaanlage im Betriebszustand "Belüften",
- Fig. 9: eine Zusammenbaudarstellung der Stellvorrichtung mit Klappen in der Stellung "Belüften", welche der Winkelstellung IX in Fig. 15 entspricht,
- Fig. 10: eine Zusammenbaudarstellung der Stellvorrichtung mit Klappen in der Stellung "Fußraum/Belüften", welche der Winkelstellung X in Fig. 15 entspricht,
- Fig. 11: eine Zusammenbaudarstellung der Stellvorrichtung mit Klappen in der Stellung "Fußraum/Belüften/Entfrosten", welche der Winkelstellung XI in Fig. 15 entspricht,
- Fig. 12: eine Zusammenbaudarstellung der Stellvorrichtung mit Klappen in der Stellung "Fußraum", welche der Winkelstellung XII in Fig. 15 entspricht,
- Fig. 13: eine Zusammenbaudarstellung der Stellvorrichtung mit Klappen in einer weiteren Stellung "Fußraum/Entfrosten", welche der Winkelstellung XIII in Fig. 15 entspricht,
- Fig. 14: eine Zusammenbaudarstellung der Stellvorrichtung mit Klappen in der Stellung "Entfrosten", welche der Winkelstellung XIV in Fig. 15 entspricht, und
- Fig. 15: einen Schaltplan der Ansteuerung der vier Klappen.

Eine Kraftfahr-zeug-Klimaanlage 1 weist in einem Luftführungsgehäuse 2 mit Trennwänden 3 zur Aufteilung der temperierten Luft in vorliegend zwei Klimazonen ein Gebläse 4, einen Verdampfer 5 und einen Heizer 6 mit Zuheizer 7 auf. Die Temperierung der Luft erfolgt im Prinzip auf bekannte Weise mit Hilfe von Klappen 8 und 9, welche den Luftstrom entsprechend der gewünschten Temperatur durch den Verdampfer 5 und durch den Heizer 6 mit Zuheizer 7 oder an demselben vorbei führen, wobei die Klappen 8 und 9 auf bekannte Weise über einen Hebel 10 miteinander gekoppelt sind und durch ein einziges Stellorgan (nicht dargestellt) betätigt werden.

Für die Luftverteilung der temperierten Luft sind klimazonenspezifisch vier Klappen 11, 12, 13 und 14 zum Verschließen und ganz oder teilweise Freigeben der entsprechenden Luftkanäle vorgesehen, die über ein gemeinsames Stellorgan (nicht dargestellt, vorliegend jedoch ein herkömmlicher Schrittmotor) über eine entsprechende Stellvorrichtung 15 betätigbar sind Hierbei bezeichnet im Folgenden das Bezugszeichen 11 die Entfrostungsklappe, das Bezugszeichen 12 die Frontbelüftungsklappe, das Bezugszeichen 13 die Fondbelüftungsklappe und das Bezugszeichen 14 die Fußraumklappe.

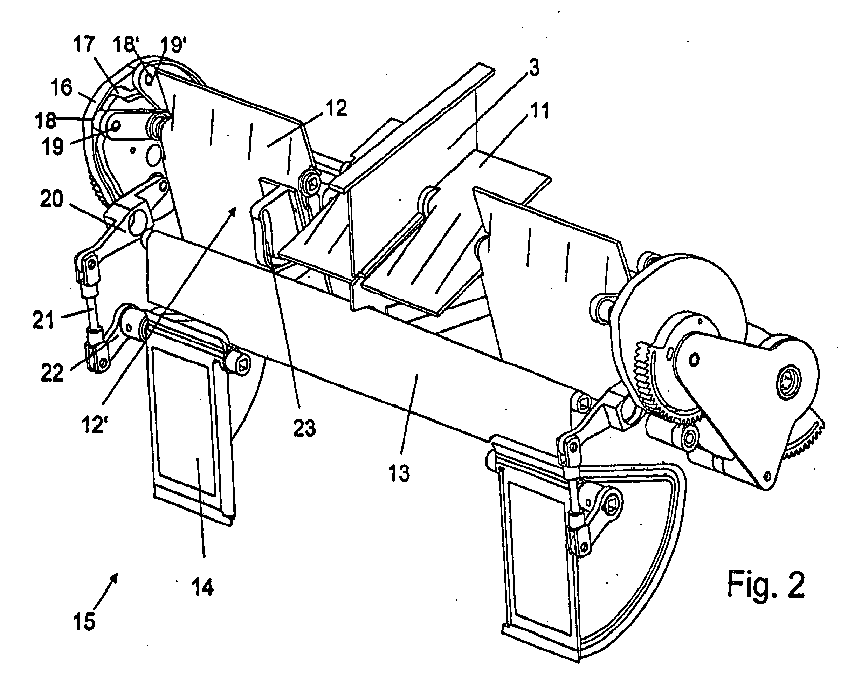

Die Stellvorrichtung 15 weist eine Kurvenscheibe 16 mit einer klappenseitig ausgebildeten ersten Führung 17 in Form einer Kurvenbahn, in welcher zwei Führungszapfen 18, 18', der am Ende entsprechender Hebelarme 19, 19' angeordnet sind, geführt werden. Hierbei ist der erste Hebelarm 19 mit der Frontbelüftungsklappe 12 und der zweite Hebelarm 19' mit der Entfrostungsklappe 11 verbunden (vgl. Fig. 2), die schwenkbar gelagert sind.

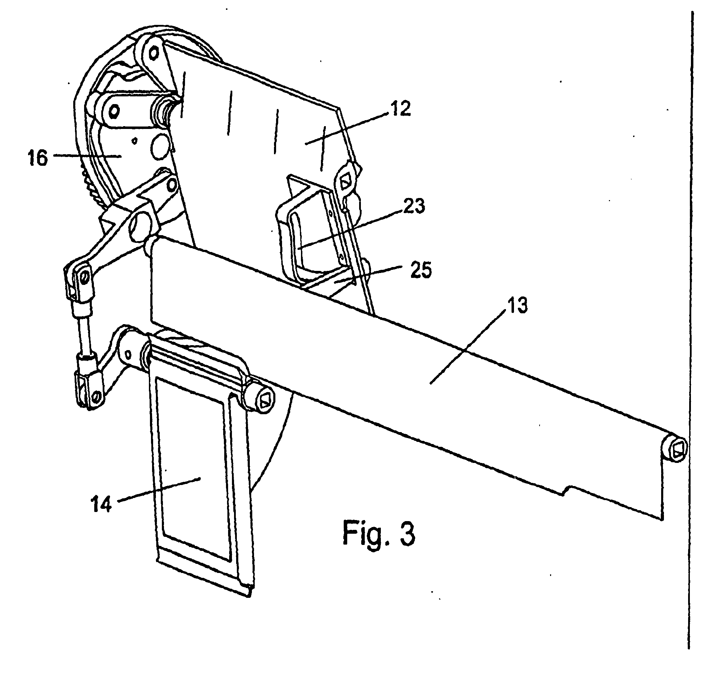

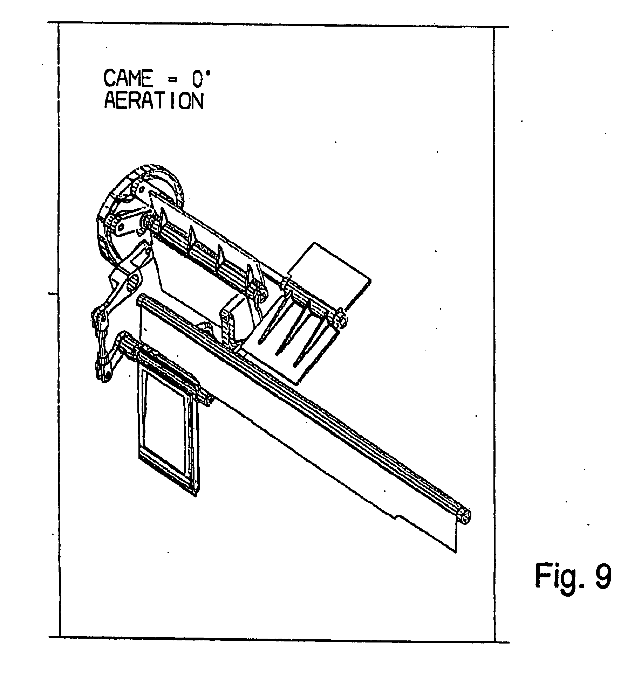

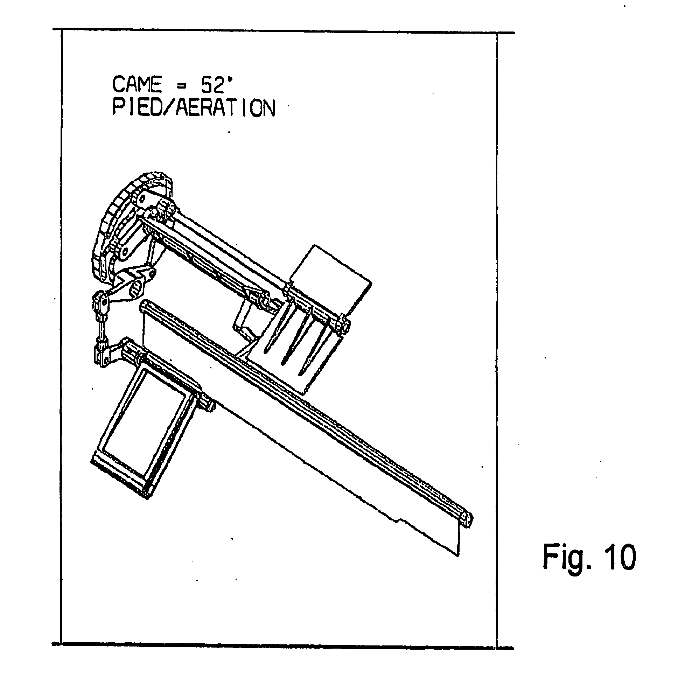

An der Kurvenscheibe 16 ist auf der gleichen Seite ferner ein schwenkbar gelagerter dritter Hebelarm 20 mit seinem einen Ende in einer weiteren Führung in Form einer weiteren Kurvenbahn geführt, der durch eine Schwenkbewegung die Fußklappe 14 regelt. Hierfür ist am der Kurvenscheibe 16 gegenüberliegenden Ende des dritten Hebelarms 20 ein Zwischenstück 21 schwenkbar mit einem Ende angebracht, das mit dem anderen Ende schwenkbar an einem vierten Hebelarm 22 angebracht ist, welcher mit der schwenkbar gelagerten Fußklappe 14 verbunden ist, so dass durch eine Schwenkbewegung des dritten Hebelarms 20 in Folge einer Drehung der Kurvenscheibe 16, die eine Schwenkbewegung des Hebelarms 20 in Fig. 3 nach unten bewirkt, die untere Kante der Fußklappe 14 entgegen der Blickrichtung auf Fig. 3 bewegt wird (vgl. beispielsweise Figuren 9 und 10).

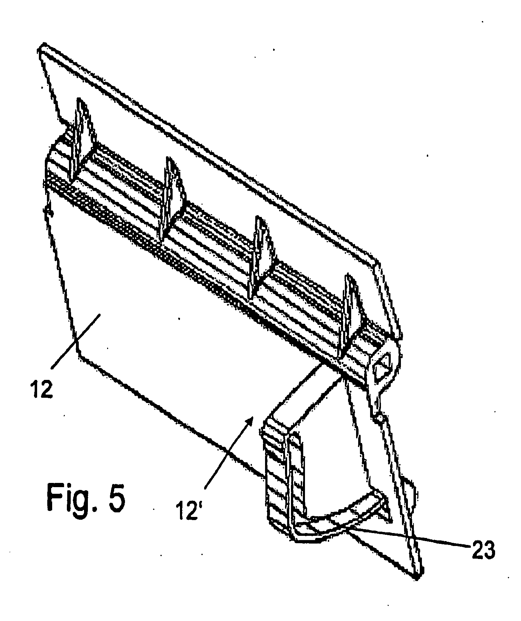

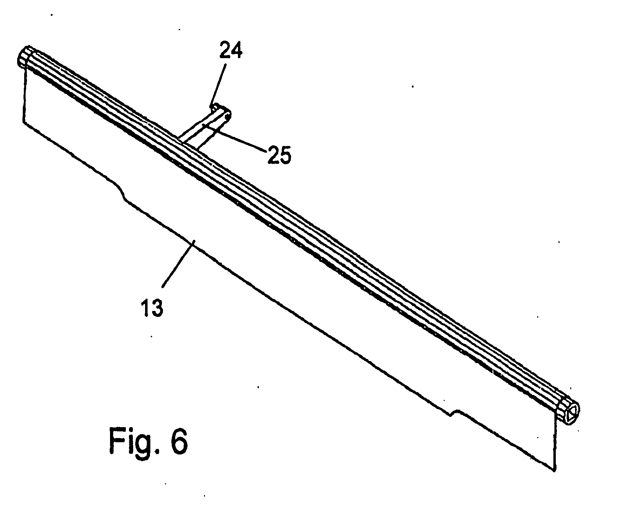

An der schwenkbar gelagerten Frontbelüftungsklappe12 ist an einer Klappenfläche 12' in einer radialen Ebene erstreckend eine Art Kurvenscheibe ausgebildet (vgl. Fig. 5), welche eine abgerundet etwa L-förmige Führung 23 für einen Zapfen 24 bildet, der am Ende eines Hebelarms 25 angebracht ist. Der Hebelarm 25 ist integriert an der Fondbelüftungsklappe 13 ausgebildet (vgl. Fig. 6), wobei er ebenfalls sich in einer radialen Ebene erstreckend ausgebildet ist.

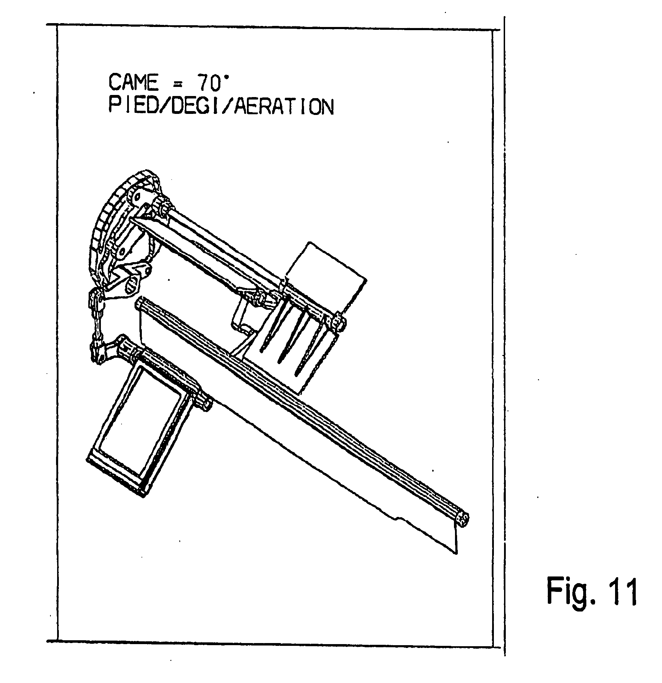

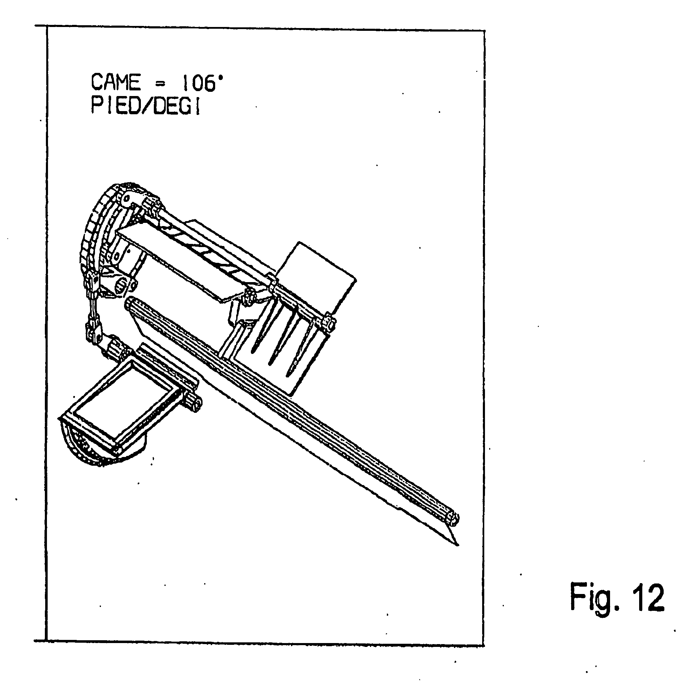

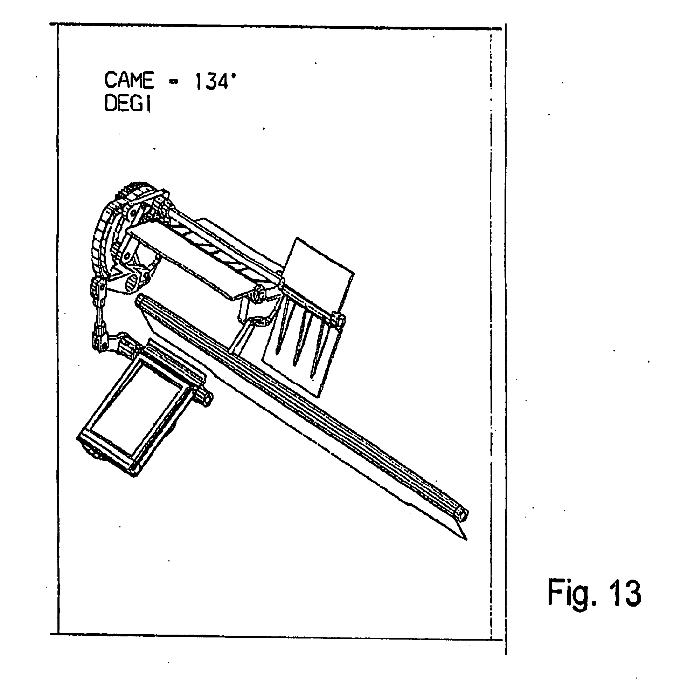

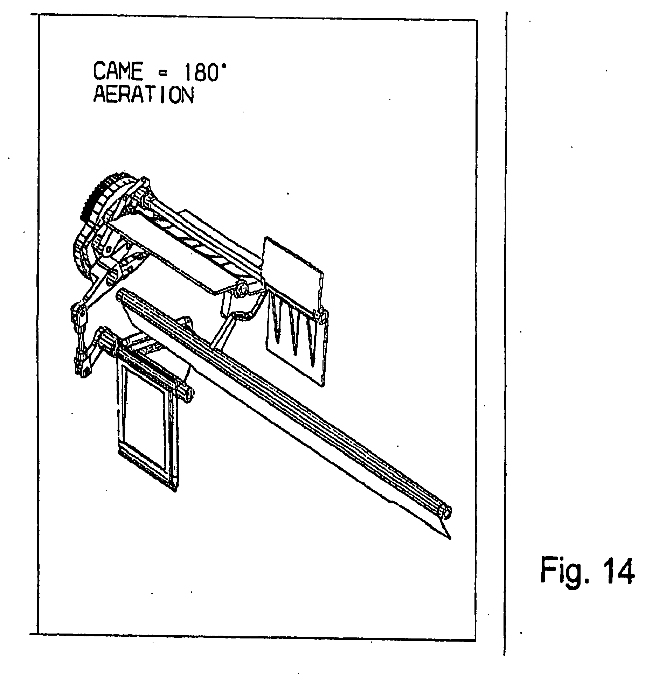

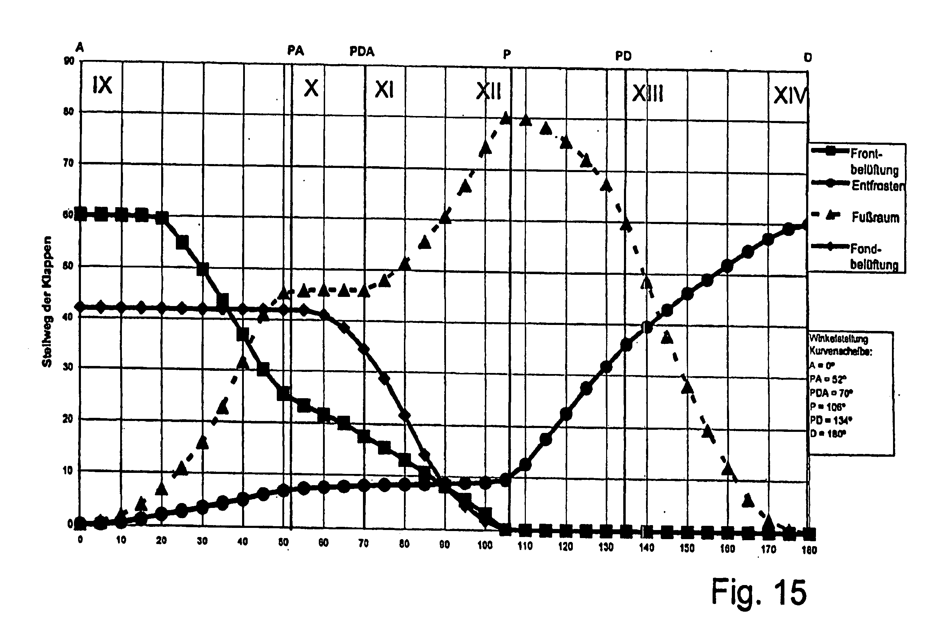

Durch das Zusammenwirken von Führung 23 und Zapfen 24 wird die Fondbelüftungsklappe 13 in Abhängigkeit von der Frontbelüftungsklappe 12 betätigt, wobei, wie aus Fig. 15 zu entnehmen ist, im Falle eines Schließens der Frontbelüftungsklappe 13 die Fondbelüftungsklappe 14 erst verzögert schließt, beide Klappen aber etwa gleichzeitig vollständig geschlossen sind. Entsprechend öffnet zuerst die Fondbelüftungsklappe 14 vollständig, bevor die Frontbelüftungsklappe 13 vollständig öffnet. Die in Fig. 15 durch senkrechte, dick durchgezogene Linien dargestellten und durch IX bis XIV bezeichneten Winkelpositionen der Kurvenscheibe sind in den Figuren 9 bis 14 dargestellt.

### Bezugszeichenliste

- 1: Klimaanlage
- 2: Luftführungsgehäuse
- 3: Trennwand
- 4: Gebläse
- 5: Verdampfer
- 6: Heizer
- 7: Zuheizer
- 8, 9: Klappe
- 10: Hebel
- 11: Entfrostungsklappe
- 12: Frontbelüftungsklappe
- 12': Klappenfläche
- 13: Fondbelüftungsklappe
- 14: Fussraumklappe
- 15: Stellvorrichtung
- 16: Kurvenscheibe
- 17: Führung
- 18, 18': Führungszapfen
- 19: erster Hebelarm
- 19': zweiter Hebelarm
- 20: dritter Hebelarm
- 21: Zwischenstück
- 22: vierten Hebelarm
- 23: Führung
- 24: Zapfen
- 25: Hebelarm

## Patentansprüche

1. Stellvorrichtung für wenigstens drei Klappen einer Belftungs-, Heizungs- oder Klimaanlage eines Kraftfahrzeugs mit mindestens einer Kurvenscheibe (16), die klappenseitig ausgebildete Führungen als Kurvenbahnen für Hebel aufweist, **dadurch gekennzeichnet, dass** eine weitere Führung (23) als Kurvenbahn für einen Hebel an einer der Klappen (12) ausgebildet ist, wobei die Führung (23) an einer der Flächen der Klappe (12) angebracht ist und von dieser vorstehend ausgebildet ist, wobei die Führung (23) in einer Ebene angeordnet ist, die senkrecht zur Schwenkachse der Klappe (12) verläuft.

2. Stellvorrichtung nach Anspruch 1, **dadurch gekennzeichnet, dass** ein Hebelarm (25) mit Zapfen (24) in eine der Klappen (13) integriert ausgebildet oder hieran angebracht ist.

3. Stellvorrichtung nach Anspruch 2, **dadurch gekennzeichnet, dass** der Hebelarm (25) mit Zapfen (24) an einer benachbart zur Klappe (12) mit Führung (23) angeordneten Klappe (13) angebracht oder ausgebildet ist.

4. Stellvorrichtung nach Anspruch 2 oder 3, **dadurch gekennzeichnet, dass** der Hebelarm (25) in einer Ebene angeordnet ist, die senkrecht zur Schwenkachse der Klappe (13) verläuft.

5. Stellvorrichtung nach einem der Ansprüche 1 bis 4, **dadurch gekennzeichnet, dass** die Führung (23) abgerundet V- oder L-förmig ausgebildet ist.

6. Stellvorrichtung nach einem der vorhergehenden Ansprüche, **dadurch gekennzeichnet, dass** der Bereich der Klappe (12), in welchem die Führung (23) ausgebildet ist, einstückig mit der Klappe (12) ausgebildet ist.

7. Stellvorrichtung nach einem der vorhergehenden Ansprüche, **dadurch gekennzeichnet, dass** die Schwenkachsen der Klappen (12, 3) parallel zueinander angeordnet sind.

8. Stellvorrichtung nach einem der vorhergehenden Ansprüche, **dadurch gekennzeichnet, dass** genau ein Stellorgan vorgesehen ist.

9. Stellvorrichtung nach Anspruch 8, **dadurch gekennzeichnet, dass** das Stellorgan ein Schrittmotor ist.

10. Stellvorrichtung nach einem der vorhergehenden Ansprüche, **dadurch gekennzeichnet, dass** die Klappen Kunststoff-Spritzgußteile sind.

## Claims

1. An actuating device for at least three damper doors of a vehicle heating, ventilating or air conditioning system having at least one cam plate (16) which has guides formed on the damper door side as cam tracks for levers, **characterized in that** a further guide (23) as a cam track for a lever is formed on one of the damper doors (12), the guide (23) being mounted on and formed projected from one of the faces of the damper door (12), the guide (23) being positioned in a plane which runs perpendicular to the axis of pivoting of the damper door (12).

2. An actuating device in accordance with claim 1, **characterized in that** a lever arm (25) with pin (24) is integrated in or mounted on one of the damper doors (13).

3. An actuating device in accordance with claim 2, **characterized in that** the lever arm (25) with pin (24) is mounted or formed on a damper door (13) adjacent to the damper door (12) with guide (23).

4. An actuating device in accordance with claim 2 or 3, **characterized in that** the lever arm (25) is positioned in a plane which runs perpendicular to the axis of pivoting of the damper door (13).

5. An actuating device according to one of claims 1 to 4, **characterized in that** the guide (23) is formed as a rounded V- or L-shape.

6. An actuating device in accordance with one of the preceding claims, **characterized in that** the area of the damper door (12) in which the guide (23) is formed is made in one piece with the damper door (12).

7. An actuating device in accordance with one of the preceding claims, **characterized in that** the axes of pivoting of the damper doors (12, 13) are positioned parallel to one another.

8. An actuating device in accordance with one of the preceding claims, **characterized in that** exactly one control unit is provided.

9. An actuating device in accordance with claim 8, **characterized in that** the control unit is a stepper motor.

10. An actuating device in accordance with one of the preceding claims, **characterized in that** the damper doors are plastic injection moulded parts.

## Revendications

1. Actionneur de réglage pour au moins trois volets d'un système de ventilation, de chauffage ou de climatisation d'un véhicule automobile, comprenant au moins une came plate (16) qui présente, côté volets, des guidages configurés comme des pistes de cames pour un levier,
**caractérisé en ce qu'**un autre guidage (23) est configuré, sur l'un des volets (12), comme une piste de came pour un levier, où le guidage (23) est fixé sur l'une des surfaces du volet (12) et est configuré en saillie par rapport à celle-ci, où le guidage (23) est disposé dans un plan qui s'étend perpendiculairement à l'axe de pivotement du volet (12).

2. Actionneur de réglage selon la revendication 1, **caractérisé en ce qu'**un bras de levier (25) comportant des tourillons (24) est intégré dans l'un des volets (13) ou fixé sur celui-ci.

3. Actionneur de réglage selon la revendication 2, **caractérisé en ce que** le bras de levier (25) comportant des tourillons (24) est fixé ou configuré sur un volet (13) disposé en étant contigu au volet (12) à guidage (23).

4. Actionneur de réglage selon la revendication 2 ou 3, **caractérisé en ce que** le bras de levier (25) est disposé dans un plan qui s'étend perpendiculairement à l'axe de pivotement du volet (13).

5. Actionneur de réglage selon l'une quelconque des revendications 1 à 4, **caractérisé en ce que** le guidage (23) est de forme arrondie en V ou en L.

6. Actionneur de réglage selon l'une quelconque des revendications précédentes, **caractérisé en ce que** la zone du volet (12), dans laquelle est configuré le guidage (23), est formée d'un seul tenant avec le volet (12).

7. Actionneur de réglage selon l'une quelconque des revendications précédentes, **caractérisé en ce que** les axes de pivotement des volets (12, 13) sont disposés parallèlement l'un à l'autre.

8. Actionneur de réglage selon l'une quelconque des revendications précédentes, **caractérisé en ce qu'**un actionneur de commande est précisément prévu.

9. Actionneur de réglage selon la revendication 8, **caractérisé en ce que** l'actionneur de commande est un moteur pas-à-pas.

10. Actionneur de réglage selon l'une quelconque des revendications précédentes, **caractérisé en ce que** les volets sont des pièces en matière plastique moulées par injection.
